# EUROPÄISCHE PATENTSCHRIFT

(11) **EP 3 263 425 B1**
(45) Veröffentlichungstag und Bekanntmachung des Hinweises auf die Patenterteilung: **12.08.2020**
(21) Anmeldenummer: 16176491.5
(22) Anmeldetag: 27.06.2016
(51) Int. Cl.: B62D 25/00, B62D 29/00

(54) **DÄMMELEMENT**
INSULATION ELEMENT
ÉLÉMENT D'ISOLATION

(43) Veröffentlichungstag der Anmeldung: 03.01.2018
(73) Patentinhaber: Sika Technology AG, 6340 Baar (CH)
(72) Erfinder: Brichet, Nicolas, 8055 Zürich (CH)
(74) Vertreter: Sika Patent Attorneys

(56) Entgegenhaltungen:
- EP-A2- 1 362 683
- WO-A1-2011/146793
- WO-A1-2014/095620
- JP-A- 2006 001 472

## Beschreibung

Die Erfindung betrifft ein Dämmelement mit einem Trägerelement und einem expandierbaren Material, insbesondere zur Dämmung eines Strukturelements mit einem Hohlraum in einem Fahrzeug. Sie betrifft des Weiteren ein System mit einem Strukturelement und einem darin angeordneten Dämmelement.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

Aus EP 1362683A2 ist ein Baffle bekannt, bei welchem expandierbares Material zwischen zwei Platten eingeklemmt ist. Die Platten haben Öffnungen, sodass sich das expandierbare Material bei einer Expansion durch diese Öffnungnen hindurch ausbreiten kann.
Aus WO2014/095620A1 ist ein Dämmelement bekannt, bei welchem _expandierbares Material auf einer Seite eines Trägers angeordnet ist. Bei einer Expansion kann sich das expandierbare Material durch Öffnungen hindurch auf die andere Seite des Trägers ausbreiten.
Aus WO2011/146793A1 ist ein Träger mit einem streifenförmigen expandierbaren Material bekannt. welches in Öffnungen des Trägers gedrückt wird.

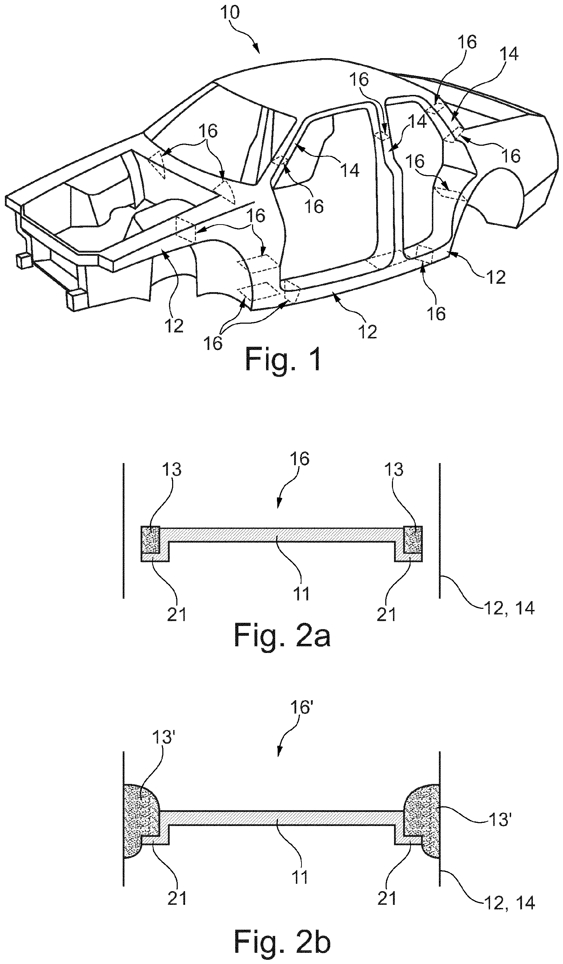

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a ein Dämmelement 16 vor einer Expansion eines expandierbaren Materials 13. Fig. 2b zeigt dasselbe Dämmelement 16, jedoch nach einer Expansion des expandierbaren Materials 13, also mit dem expandierten Material 13'.

Das Dämmelement 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Das Dämmelement 16 umfasst ein Trägerelement 11, welches einen Randbereich 21 hat. Das expandierbare Material 13 ist dabei im Wesentlichen auf diesem Randbereich 21 des Trägerelementes 11 angeordnet.

Vor der Expansion des expandierbaren Materials 13 besteht zwischen dem Dämmelement 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen dem Dämmelement 16 und dem Strukturelement 12, 14 schliesst. Zudem wird durch die Expansion des expandierbaren Materials 13 auch zugleich eine Fixierung des Dämmelementes 16' im Strukturelement 12, 14 erreicht. Ein derart im Strukturelement 12, 14 befestigtes Dämmelement 16' verstärkt einerseits das Strukturelement 12, 14 und verschliesst andererseits den Hohlraum im Strukturelement 12, 14.

Nachteilig an solchen Dämmelementen 16 ist es, dass das expandierbare Material 13 und das Trägerelement 11 nicht optimal miteinander verbunden sind. Dies ist sowohl nachteilig für eine Lagerung bzw. einen Transport des Dämmelementes 16, als auch für die Durchführung der Expansion im Strukturelement 12, 14. Bei der Expansion des expandierbaren Materials 13 können sich dabei Teile des expandierbaren Materials 13 vom Trägerelement 11 lösen und verschieben, was eine verschlechterte Anordnung des expandierten Materials 13' im Strukturelement 12, 14 zur Folge hat.

Der Erfindung liegt daher die Aufgabe zugrunde, ein verbessertes Dämmelement der oben erläuterten Art bereitzustellen, insbesondere ein Dämmelement mit einer verbesserten Befestigung des expandierbaren Materials auf dem Trägerelement.

Diese Aufgabe wird gelöst durch ein Dämmelement zur Dämmung eines Strukturelementes in einem Fahrzeug, das Dämmelement umfassend ein Trägerelement mit einer ersten Oberfläche und einer zweiten Oberfläche und ein expandierbares Material, welches zumindest auf Teilbereichen der ersten Oberfläche des Trägerelementes angeordnet ist. Das Trägerelement weist zumindest eine Durchdringung auf und das expandierbare Material ragt durch die Durchdringung hindurch und bildet einen Überstand auf einer Seite der zweiten Oberfläche des Trägerelementes. Der Überstand ist derart dimensioniert und das expandierbare Material ist derart ausgebildet, dass der Überstand nach einer Expansion einen grösseren Querschnitt aufweist als ein Querschnitt der Durchdringung.

Diese Lösung hat den Vorteil, dass dadurch eine markant bessere Befestigung des expandierbaren Materials auf dem Trägerelement erreicht werden kann. Bei der hier vorgeschlagenen Lösung kann das expandierbare Material auf einfache Weise auf dem Trägerelement angeordnet werden. Dabei sind keine speziellen Verfahrensschritte oder Werkzeuge notwendig. Durch die spezifische Anordnung des expandierbaren Materials auf der ersten Oberfläche des Trägerelementes und in der Durchdringung sowie im hindurchragenden Überstand ergibt sich durch die Expansion eine stark verbesserte Verbindung zwischen expandiertem Material und Trägerelement.

Ein Kerngedanke der vorliegenden Erfindung besteht darin, dass der Überstand derart gestaltet ist, dass er möglichst rasch durch eine Expansion einen grösseren Querschnitt aufweist als die Durchdringung im Trägerelement. Dies kann beispielsweise dadurch erreicht werden, dass der Überstand dünn im Vergleich zum restlichen expandierbaren Material ausgeführt wird. Somit kann eine Wärmeeinwirkung ideal auf den Überstand einwirken und diesen schneller expandieren als andere Teile des expandierbaren Materials. Eine möglichst schnelle Expansion des Überstandes wird das expandierbare Material zuverlässig am Trägerelement befestigen, weil durch die Expansion des Überstandes das expandierbare Material nicht mehr aus der Durchdringung hinausgeführt werden kann. Das unexpandierte Dämmelement weist ebenfalls eine genügende Verbindung zwischen expandierbarem Material und Trägerelement auf, weil durch die Überstände das expandierbare Material nicht seitlich vom Trägerelement wegbewegt werden kann.

Die Bezeichnung "Dämmelement" umfasst im Zusammenhang mit dieser Erfindung Elemente zur Abschottung und/oder Verstärkung und/oder Dämmung eines Strukturelementes. Diese verschiedenen Eigenschaften eines solchen Dämmelementes können dabei einzeln oder in Kombination miteinander auftreten.

Die Bezeichnung "Querschnitt" mit Bezug auf die Durchdringung und den Überstand bedeutet im Zusammenhang dieser Erfindung ein Querschnitt, welcher im Wesentlichen in einer Ebene des Trägerelementes liegt. Somit liegen die Querschnitte der Durchdringung und des Überstandes im Wesentlichen orthogonal zu einer Achse der Durchdringung.

In einer beispielhaften Ausführungsform weist der Querschnitt der Durchdringung und der Querschnitt des Überstandes eine gleiche Form auf. Dabei kann beispielsweise der Querschnitt des Überstandes geringfügig kleiner sein als der Querschnitt der Durchdringung. Eine solche Gleichförmigkeit der Querschnitte hat den Vorteil, dass dadurch das Herstellen des Dämmelementes vereinfacht wird. Beispielsweise kann so das expandierbare Material in bekannter Art und Weise auf das Trägerelement aufextrudiert werden.

In einer beispielhaften Ausführungsform weisen der Querschnitt der Durchdringung und der Querschnitt des Überstandes eine im Wesentlichen gleich grosse Fläche auf.

Dies hat den Vorteil, dass dadurch das expandierbare Material bereits gut mit dem Trägerelement verbunden ist, bevor das expandierbare Material und der Überstand expandiert werden.

In einer beispielhaften Ausführungsform ist der Überstand zylinderförmig, konisch oder abgestuft ausgebildet.

Eine solche Ausbildung des Überstandes hat den Vorteil, dass dadurch das expandierbare Material durch herkömmliche Verfahren auf das Trägerelement aufgebracht werden kann.

In einer beispielhaften Ausführungsform weist der Überstand einen konstanten Querschnitt auf. In einer beispielhaften Weiterbildung ist der Querschnitt des Überstandes kreisförmig, elliptisch oder oval.

In einer beispielhaften Ausführungsform hat der Querschnitt des Überstandes einen grössten Durchmesser von 1 bis 10 mm, bevorzugt von 1.5 bis 8 mm, besonders bevorzugt von 2 bis 5 mm.

In einer beispielhaften Ausführungsform hat der Überstand eine Länge, gemessen von der zweiten Oberfläche bis zu einem freien Ende des Überstandes, von 0.5 bis 30 mm, bevorzugt 1 bis 15 mm, besonders bevorzugt 1.5 bis 8 mm.

Eine solche Dimensionierung des Überstandes bezüglich seines Querschnittes und bezüglich seiner Länge hat den Vorteil, dass dadurch eine Hitzeeinwirkung, welche für die Expansion des expandierbaren Materials verantwortlich ist, möglichst effektiv auf den Überstand einwirken kann. Dabei expandieren Formen schneller, je grösser deren Oberfläche im Verhältnis zu deren Volumen ist. Der hier vorgeschlagene Überstand trägt diesem Aspekt Rechnung. Dadurch kann eine möglichst rasche Expansion des Überstandes erreicht werden, so dass das expandierbare Material möglichst früh im Expansionsprozess expandiert und dadurch das expandierbare Material effektiv an das Trägerelement anbindet.

In einer beispielhaften Ausführungsform weist das Trägerelement mehrere Durchdringungen auf und das expandierbare Material bildet mehrere Überstände aus.

Das Vorsehen von mehreren Überständen in mehreren Durchdringungen hat den Vorteil, dass dadurch eine bessere Anbindung des expandierbaren Materials am Trägerelement erreicht werden kann.

In einer beispielhaften Weiterbildung sind die Durchdringungen in einem Randbereich des Trägerelementes angeordnet.

In einer beispielhaften Weiterbildung sind die Durchdringungen im Wesentlichen über eine gesamte Länge des Trägerelementes über den Randbereich verteilt.

In einer beispielhaften Weiterbildung beträgt ein Abstand zwischen benachbarten Durchdringungen zwischen 5 und 50 mm, bevorzugt zwischen 7 und 35 mm, besonders bevorzugt zwischen 10 und 20 mm.

Das Anordnen der Durchdringungen im Randbereich und über im Wesentlichen eine gesamte Länge des Trägerelementes in regelmässigen Abständen bietet den Vorteil, dass dadurch das gesamte auf dem Träger angeordnete expandierbare Material zuverlässig auf dem Trägerelement befestigt werden kann.

In einer beispielhaften Ausführungsform bildet das expandierbare Material ein einziges zusammenhängendes Element. In einer alternativen Ausführungsform bilden mehrere nicht zusammenhängende expandierbare Materialien mehrere nicht zusammenhängende Elemente.

In einer beispielhaften Ausführungsform hat das expandierbare Material eine Expansionsrate von 300 bis 3000%. In einer beispielhaften Weiterbildung hat das expandierbare Material eine Expansionsrate von 1000 und 2700% bzw. zwischen 1500 und 2500%.

Eine solche Expansionsrate des expandierbaren Materials stellt sicher, dass der Überstand nach der Expansion einen grösseren Querschnitt aufweist als der Querschnitt der Durchdringung.

Weiterhin wird ein System mit einem Strukturelement und einem darin angeordneten Dämmelement gemäss obiger Beschreibung vorgeschlagen.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellungen zur Erläuterung eines beispielhaften Dämmelementes gemäss Stand der Technik;
- Fig. 3: schematische Darstellung eines beispielhaften Dämmelementes;
- Fig. 4: schematische Darstellung eines Ausschnittes eines beispielhaften Dämmelementes;
- Fig. 5: schematische Darstellung eines Querschnittes durch einen Ausschnitt eines beispielhaften Dämmelementes; und
- Fig. 6a bis 6f: schematische Darstellungen eines beispielhaften Expansionsvorganges eines beispielhaften Dämmelementes.

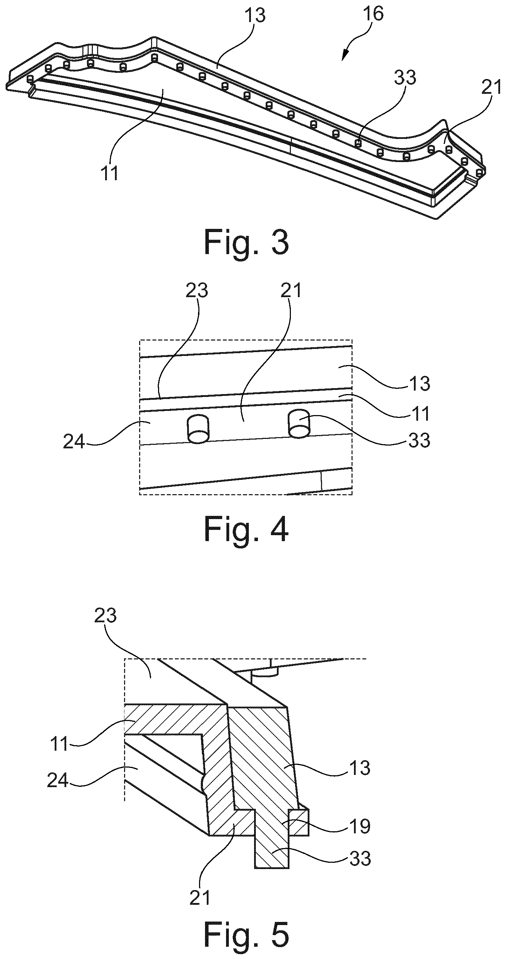

In Fig. 3a ist ein beispielhaftes Dämmelement 16 dargestellt. Das Dämmelement 16 hat ein Trägerelement 11 und ein darauf angeordnetes expandierbares Material 13. Das expandierbare Material 13 ist dabei zumindest auf einem Teilbereich einer ersten Oberfläche des Trägerelementes 11 angeordnet. In diesem Ausführungsbeispiel ist das expandierbare Material 13 auf einem Randbereich 21 des Trägerelementes 11 angeordnet. Das Trägerelement 11 hat mehrere Durchdringungen. Das expandierbare Material 13 bildet Überstände 33, welche durch die Durchdringungen des Trägerelementes 11 hindurchragen und dadurch über einer Seite der zweiten Oberfläche des Trägerelementes 11 stehen. In diesem Ausführungsbeispiel sind die Durchdringungen und die Überstände im Wesentlichen über eine gesamte Länge des Trägerelementes 11 angeordnet.

In Fig. 4 ist ein Ausschnitt aus dem beispielhaften Dämmelement 16 gemäss Fig. 3 dargestellt. Das expandierbare Material 13 ist wiederum auf der ersten Oberfläche 23 des Trägerelementes 11 angeordnet. Auch hier ist das expandierbare Material 13 auf einem Randbereich 21 des Trägerelements 11 angeordnet. Das expandierbare Material 13 bildet dabei Überstände 33, welche durch Durchdringungen des Trägerelementes 11 hindurchragen und dadurch über einer Seite der zweiten Oberfläche 24 des Trägerelementes 11 stehen.

In Fig. 5 ist ein Querschnitt aus dem Ausschnitt des beispielhaften Dämmelementes 16 gemäss Fig. 4 dargestellt. Dieser Querschnitt in Fig. 5 verdeutlicht das Hindurchragen des expandierbaren Materials 13 durch die Durchdringung 19 im Trägerelement 11, wobei das expandierbare Material 13 einen Überstand 33 bildet, welcher über einer Seite einer zweiten Oberfläche 24 des Trägerelementes 11 steht. Das expandierbare Material 13 ist dabei zumindest auf Teilbereichen der ersten Oberfläche 23 des Trägerelementes 11 angeordnet. Auch in diesem Ausführungsbeispiel ist das expandierbare Material im Wesentlichen auf einem Randbereich 21 des Trägerelementes 11 angeordnet.

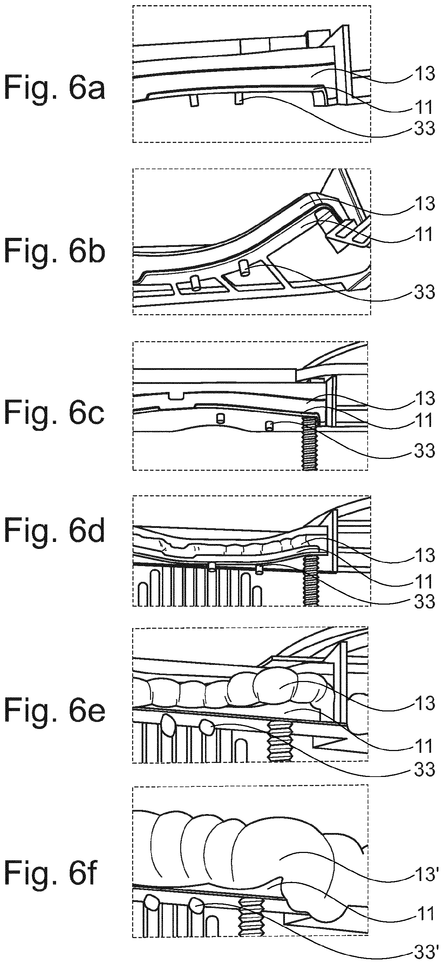

In den Fig. 6a bis 6f ist ein beispielhafter Expansionsvorgang eines beispielhaften Dämmelementes 16 unter Wärmeeinwirkung dargestellt. Dabei ist ersichtlich, dass das expandierbare Material 13 während des gesamten Expansionsprozesses an seiner vorgesehenen Stelle auf dem Trägerelement 11 verbleibt. Die Expansion der Überstände 33 verhindert dabei ein unerwünschtes Ablösen des expandierbaren Materials 13 von der ersten Oberfläche des Trägerelementes 11 während des Expansionsvorganges. Das fertig expandierte Dämmelement gemäss Fig. 6f weist ein expandiertes Material 13' und expandierte Überstände 33' auf, welche allesamt in ihrer vorgesehenen Position auf dem Trägerelement 11 angeordnet sind.

### Expandierbare (schäumbare) Materialien

Als expandierbares Material kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate. Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 200 °C, insbesondere von 140 °C bis 190 °C, bevorzugt von 160 °C bis 180 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon® BF 1350 und Vestagon® BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden unter dem Handelsnamen SikaBaffle® 240, SikaBaffle® 250 oder SikaBaffle® 255 von der Sika Corp., USA, vertrieben und sind in den Patenten US 5,266,133 und US 5,373,027 beschrieben.

Weiterhin geeignete expandierbare Materialien werden unter den Handelsnamen SikaBaffle®-450, SikaBaffle®-420, SikaBaffle®-250NT, SikaBaffle®-255 und SikaBaffle®-250PB2 von der Sika vertrieben. Solche expandierbare Materialien haben eine Expansionsrate von ungefähr 300 - 3000 % und sind für die vorliegende Erfindung besonders bevorzugt.

Insbesondere SikaBaffle®-450 mit einer Expansionsrate von mehr als 1200 % eignet sich für die Zwecke der vorliegenden Erfindung, weil durch eine hohe Expansionsrate der zweite Teilbereich der ersten Oberfläche bei der Expansion des expandierbaren Materiales zuverlässig bedeckt wird.

In einem konkreten bevorzugten Ausführungsbeispiel wird eine Anordnung des expandierbaren Materials auf dem Trägerelement gemäss Fig. 3a mit einem Verhältnis einer Masse des expandierbaren Materials zu einer Grösse der ersten Oberfläche von ungefähr 2,5 g/cm2 ausgeführt. Dabei weist das expandierbare Material bei einer Wärmeeinwirkung von 180°C über 30 min eine Expansionsrate von ungefähr 2000 % auf. Dadurch kann eine vollständige Bedeckung der ersten Oberfläche mit expandiertem Material erreicht werden, woraus sich die beschriebenen Vorteile der Erfindung bezüglich akustischer Dämmung ergeben.

Als expandierbare Materialien mit Verstärkungseigenschaften sind beispielsweise diejenigen bevorzugt, welche unter dem Handelsnamen SikaReinforcer® 941 von der Sika Corp., USA, vertrieben werden. Diese sind beschrieben in US 6,387,470.

### Trägermaterial

Das Trägerelement kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet. Auch Kombinationen mit Fasern, wie beispielsweise Glasfasern oder Karbonfasern, sind möglich.

Weiterhin kann das Trägerelement einen beliebigen Aufbau und eine beliebige Struktur aufweisen. Es kann beispielsweise massiv, hohl, oder geschäumt sein oder eine gitterartige Struktur aufweisen. Die Oberfläche des Trägerelements kann typischerweise glatt, rau oder strukturiert sein.

Bei erfindungsgemässen Abdichtungs- und Verstärkungselementen, bei welchen sich das expandierbare Material auf einem Trägerelement befindet, unterscheidet sich das Herstellungsverfahren dementsprechend, ob das Trägerelement aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerelement, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht das Trägerelement aus einem Material, welches sich nicht durch das Spritzgussverfahren herstellen lässt, also beispielsweise aus einem Metall, wird das Trägerelement in ein entsprechendes Werkzeug gelegt und das expandierbare Material wird an das Trägerelement angespritzt. Selbstverständlich besteht auch die Möglichkeit das expandierbare Material durch spezielle Befestigungsmittel oder -verfahren an dem Trägerelement zu befestigen.

## Patentansprüche

1. Dämmelement (16) zur Dämmung eines Strukturelementes (12, 14) in einem Fahrzeug, das Dämmelement (16) umfassend
ein Trägerelement (11) mit einer ersten Oberfläche (23) und einer zweiten Oberfläche (24)
und ein expandierbares Material (13), welches zumindest auf Teilbereichen der ersten Oberfläche (23) des Trägerelementes (11) angeordnet ist,
wobei das Trägerelement (11) zumindest eine Durchdringung (19) aufweist und das expandierbare Material (13) durch die Durchdringung (19) hindurchragt und einen Überstand (33) auf einer Seite der zweiten Oberfläche (24) des Trägerelementes (11) bildet, **dadurch gekennzeichnet, dass** der Überstand (33) einen konstanten Querschnitt aufweist, wobei der Überstand (33) derart dimensioniert und das expandierbare Material (13) derart ausgebildet ist, dass der Überstand (33) nach einer Expansion einen grösseren Querschnitt aufweist als ein Querschnitt der Durchdringung (19).

2. Dämmelement (16) nach Anspruch 1, wobei der Querschnitt der Durchdringung (19) und der Querschnitt des Überstandes (33) eine gleiche Form aufweisen.

3. Dämmelement (16) nach einem der vorhergehenden Ansprüche, wobei der Querschnitt der Durchdringung (19) und der Querschnitt des Überstandes (33) eine im Wesentlichen gleich grosse Fläche aufweisen.

4. Dämmelement (16) nach einem der vorhergehenden Ansprüche, wobei der Überstand (33) zylinderförmig, konisch oder abgestuft ausgebildet ist.

5. Dämmelement (16) nach einem der vorhergehenden Ansprüche, wobei der Querschnitt des Überstandes (33) kreisförmig, elliptisch oder oval ist.

6. Dämmelement (16) nach einem der vorhergehenden Ansprüche, wobei der Querschnitt des Überstandes (33) einen grössten Durchmesser von 1 bis 10 mm, bevorzugt von 1.5 bis 8 mm, besonders bevorzugt von 2 bis 5 mm hat.

7. Dämmelement (16) nach einem der vorhergehenden Ansprüche, wobei der Überstand (33) eine Länge, gemessen von der zweiten Oberfläche (24) bis zu einem freien Ende des Überstandes (33), von 0.5 bis 30 mm, bevorzugt von 1 bis 15 mm, besonders bevorzugt von 1.5 bis 8 mm hat.

8. Dämmelement (16) nach einem der vorhergehenden Ansprüche, wobei das Trägerelement (11) mehrere Durchdringungen (19) aufweist und das expandierbare Material (13) mehrere Überstände (33) ausbildet.

9. Dämmelement (16) nach Anspruch 8, wobei die Durchdringungen (19) in einem Randbereich (21) des Trägerelements (11) angeordnet sind.

10. Dämmelement (16) nach Anspruch 9, wobei die Durchdringungen (19) im Wesentlichen über eine gesamte Länge über den Randbereich (21) des Trägerelementes (11) verteilt sind.

11. Dämmelement (12) nach einem der Ansprüche 8 bis 10, wobei ein Abstand zwischen benachbarten Durchdringungen (19) zwischen 5 und 50 mm, bevorzugt zwischen 7 und 35 mm, besonders bevorzugt zwischen 10 und 20 mm beträgt.

12. Dämmelement (16) nach einem der vorhergehenden Ansprüche, wobei das expandierbare Material (13) ein einziges zusammenhängendes Element bildet.

13. Dämmelement (16) nach einem der vorhergehenden Ansprüche, wobei das expandierbare Material (13) eine Expansionsrate von 300 bis 3000%, bevorzugt von 1000 bis 2700%, besonders bevorzugt von 1500 bis 2500% hat.

14. System mit einem Strukturelement (12, 14) und einem darin angeordneten Dämmelement (16) nach einem der Ansprüche 1 bis 13.

## Claims

1. Insulation element (16) for insulating a structural element (12, 14) in a vehicle, the insulation element (16) comprising
a support element (11) with a first surface (23) and a second surface (24)
and an expandable material (13), which is arranged at least on partial regions of the first surface (23) of the support element (11),
wherein the support element (11) has at least one penetration (19) and the expandable material (13) projects through the penetration (19) and forms a protrusion (33) on one side of the second surface (24) of the support element (11), **characterized in that** the protrusion (33) has a constant cross section, wherein the protrusion (33) is dimensioned and the expandable material (13) designed in such a way that the protrusion (33) has a larger cross section after expansion than a cross section of the penetration (19).

2. Insulation element (16) according to Claim 1, wherein the cross section of the penetration (19) and the cross section of the protrusion (33) have the same shape.

3. Insulation element (16) according to either of the preceding claims, wherein the cross section of the penetration (19) and the cross section of the protrusion (33) have an area which is substantially the same size.

4. Insulation element (16) according to one of the preceding claims, wherein the protrusion (33) is of a cylindrical, conical or stepped design.

5. Insulation element (16) according to one of the preceding claims, wherein the cross section of the protrusion (33) is circular, elliptical or oval.

6. Insulation element (16) according to one of the preceding claims, wherein the cross section of the protrusion (33) has a maximum diameter of 1 to 10 mm, preferably of 1.5 to 8 mm, particularly preferably of 2 to 5 mm.

7. Insulation element (16) according to one of the preceding claims, wherein the protrusion (33) has a length of 0.5 to 30 mm, preferably of 1 to 15 mm, particularly preferably of 1.5 to 8 mm, measured from the second surface (24) as far as a free end of the protrusion (33) .

8. Insulation element (16) according to one of the preceding claims, wherein the support element (11) has a plurality of penetrations (19) and the expandable material (13) forms a plurality of protrusions (33).

9. Insulation element (16) according to Claim 8, wherein the penetrations (19) are arranged in an edge region (21) of the support element (11).

10. Insulation element (16) according to Claim 9, wherein the penetrations (19) are distributed substantially over an entire length over the edge region (21) of the support element (11).

11. Insulation element (12) according to one of Claims 8 to 10, wherein a spacing between adjacent penetrations (19) is between 5 and 50 mm, preferably between 7 and 35 mm, particularly preferably between 10 and 20 mm.

12. Insulation element (16) according to one of the preceding claims, wherein the expandable material (13) forms a single continuous element.

13. Insulation element (16) according to one of the preceding claims, wherein the expandable material (13) has an expansion rate of 300 to 3000%, preferably of 1000 to 2700%, particularly preferably of 1500 to 2500%.

14. System with a structural element (12, 14) and an insulation element (16) according to one of Claims 1 to 13 arranged therein.

## Revendications

1. Élément amortisseur (16) pour l'amortissement d'un élément structural (12, 14) dans un véhicule, l'élément amortisseur (16) comprenant :
un élément support (11) pourvu d'une première surface (23) et d'une deuxième surface (24),
et un matériau expansible (13), qui est agencé au moins sur des zones partielles de la première surface (23) de l'élément support (11),
l'élément support (11) comprenant au moins une pénétration (19) et le matériau expansible (13) dépassant par la pénétration (19) et formant un surplomb (33) sur un côté de la deuxième surface (24) de l'élément support (11), **caractérisé en ce que** le surplomb (33) présente une section transversale constante, le surplomb (33) étant dimensionné et le matériau expansible (13) étant configuré de telle sorte que le surplomb (33) présente après une expansion une section transversale plus grande qu'une section transversale de la pénétration (19).

2. Élément amortisseur (16) selon la revendication 1, dans lequel la section transversale de la pénétration (19) et la section transversale du surplomb (33) présentent une forme identique.

3. Élément amortisseur (16) selon l'une quelconque des revendications précédentes, dans lequel la section transversale de la pénétration (19) et la section transversale du surplomb (33) présentent une surface de taille essentiellement identique.

4. Élément amortisseur (16) selon l'une quelconque des revendications précédentes, dans lequel le surplomb (33) est configuré sous forme cylindrique, conique ou échelonnée.

5. Élément amortisseur (16) selon l'une quelconque des revendications précédentes, dans lequel la section transversale du surplomb (33) est circulaire, elliptique ou ovale.

6. Élément amortisseur (16) selon l'une quelconque des revendications précédentes, dans lequel la section transversale du surplomb (33) a un diamètre maximal de 1 à 10 mm, de préférence de 1,5 à 8 mm, de manière particulièrement préférée de 2 à 5 mm.

7. Élément amortisseur (16) selon l'une quelconque des revendications précédentes, dans lequel le surplomb (33) a une longueur, mesurée à partir de la deuxième surface (24) jusqu'à une extrémité libre du surplomb (33), de 0,5 à 30 mm, de préférence de 1 à 15 mm, de manière particulièrement préférée de 1,5 à 8 mm.

8. Élément amortisseur (16) selon l'une quelconque des revendications précédentes, dans lequel l'élément support (11) comprend plusieurs pénétrations (19) et le matériau expansible (13) forme plusieurs surplombs (33) .

9. Élément amortisseur (16) selon la revendication 8, dans lequel les pénétrations (19) sont agencées dans une zone de bord (21) de l'élément support (11).

10. Élément amortisseur (16) selon la revendication 9, dans lequel les pénétrations (19) sont réparties essentiellement sur une longueur totale sur la zone de bord (21) de l'élément support (11).

11. Élément amortisseur (12) selon l'une quelconque des revendications 8 à 10, dans lequel un écart entre des pénétrations voisines (19) est compris entre 5 et 50 mm, de préférence entre 7 et 35 mm, de manière particulièrement préférée entre 10 et 20 mm.

12. Élément amortisseur (16) selon l'une quelconque des revendications précédentes, dans lequel le matériau expansible (13) forme un élément cohérent unique.

13. Élément amortisseur (16) selon l'une quelconque des revendications précédentes, dans lequel le matériau expansible (13) a un taux d'expansion de 300 à 3 000 %, de préférence de 1 000 à 2 700 %, de manière particulièrement préférée de 1 500 à 2 500 %.

14. Système comprenant un élément structural (12, 14) et un élément amortisseur (16) selon l'une quelconque des revendications 1 à 13 agencé dans celui-ci.
